# EUROPÄISCHE PATENTANMELDUNG

(11) **EP 3 346 172 A1**
(43) Veröffentlichungstag der Anmeldung: **11.07.2018**
(21) Anmeldenummer: 18150562.9
(22) Anmeldetag: 08.01.2018
(51) Int. Cl.: F16L 5/04, H02G 3/04, H02G 3/22, A62C 2/06

(54) **BRANDSCHUTZVORRICHTUNG**

(30) Priorität: 09.01.2017 DE 102017100277
(71) Anmelder: Wichmann Brandschutzsysteme GmbH & Co. KG, 57439 Attendom-Ennest (DE)
(72) Erfinder: Wichmann, Georg, 57439 Attendorn (DE)
(74) Vertreter: Schäperklaus, Jochen

(57) **Zusammenfassung**

Die Erfindung betrifft eine Brandschutzvorrichtung (100) für den Einsatz in eine Ausnehmung einer Gebäudewand und/oder einer Gebäudedecke, umfassend ein Gehäuse (101) und ein intumeszierendes Material (201), das innerhalb des Gehäuses (101) angeordnet ist, wobei das Gehäuse (101) zwei endseitige Öffnungen für die Durchführung von Kabeln und/oder Rohren durch die Brandschutzvorrichtung (100) aufweist, wobei die Brandschutzvorrichtung (100) einen wärmeisolierenden Feststoff (200) umfasst, der innerhalb des Gehäuses (101) angeordnet ist.

## Beschreibung

Die vorliegende Erfindung betrifft eine Brandschutzvorrichtung gemäß dem Oberbegriff des Anspruchs 1.

Derartige Brandschutzvorrichtungen werden in Ausnehmungen in Gebäudewänden oder Gebäudedecken für Kabel oder Rohre eingesetzt, sodass die Kabel bzw. Rohre durch die Brandschutzvorrichtung führen. Im Gehäuse der Brandschutzvorrichtung ist intumeszierendes Material angeordnet, das bei Erhitzung sein Volumen um ein Vielfaches vergrößert und so die Ausnehmung in der Wand komplett verschließt und ein Vordringen eines Brands und des damit verbundenen Qualms durch die Ausnehmung verzögert.

Das intumeszierende Material ist dabei üblicherweise graphit- oder silikatbasiert. Silikatbasierte intumeszierende Materialien können chemisch gebundenes Wasser aufweisen, das bei einer Erhitzung der Brandschutzvorrichtung verdunstet und so die Brandschutzvorrichtung kühlt. Graphitbasierte intumeszierende Materialien sind im Vergleich zu silikatbasierten leichter zu verarbeiten und weisen bei Erhitzung eine größere Volumenvergrößerung auf. Silikatbasierte intumeszierende Materialien haben den Nachteil, dass sie bei Temperaturen über 700°C ihr Volumen wieder verkleinern und somit kein Brandschutz mehr gewährleistet ist.

Die notwendige thermische Isolierung kann insbesondere bei graphitbasierten intumeszierenden Materialien durch eine besonders lange Ausgestaltung der Brandschutzvorrichtung erreicht werden. Es gibt auch Brandschutzvorrichtungen, bei denen besonders dicke Kabel noch mit intumeszierendem Material umwickelt werden müssen, um einen zuverlässigen Brandschutz zu erreichen. Solche Merkmale erhöhen den Herstellungsaufwand. Außerdem besteht die Gefahr, dass beim Einsatz die Umwicklung der besonders dicken Kabel vergessen wird.

Demgegenüber liegt der Erfindung die Aufgabe zugrunde, die Brandschutzwirkung der Brandschutzvorrichtung zu verbessern.

Diese Aufgabe wird durch eine Brandschutzvorrichtung gemäß Anspruch 1 gelöst. Ausführungsformen der Erfindung sind in den abhängigen Ansprüchen angegeben.

Die Brandschutzvorrichtung eignet sich für den Einsatz in eine Ausnehmung einer Gebäudewand und/oder einer Gebäudedecke. Die Brandschutzvorrichtung umfasst ein Gehäuse und ein intumeszierendes Material, das innerhalb des Gehäuses angeordnet ist. Unter einer Anordnung innerhalb des Gehäuses wird im Rahmen dieser Beschreibung insbesondere verstanden, dass das intumeszierende Material zwischen dem Gehäuse und den dadurch geführten Kabeln und/oder Rohren angeordnet ist. Das intumeszierende Material kann insbesondere dazu ausgebildet sein, bei Erhitzung aufzuschäumen und sein Volumen so um ein Vielfaches zu vergrößern.

Es ist möglich, dass das Gehäuse das intumeszierende Material nicht komplett umgibt. Mit anderen Worten kann das intumeszierende Material also aus dem Gehäuse herausragen. Auf diese Weise schäumt das intumeszierende Material im Brandfall auch den Spalt zwischen dem Gehäuse und der Gebäudewand bzw. der Gebäudedecke zu. Es ist auch möglich, dass das Gehäuse eine Ausnehmung aufweist, sodass sich das intumeszierende Material im Brandfall durch diese Ausnehmung in den Spalt zwischen dem Gehäuse und der Gebäudewand bzw. der Gebäudedecke ausbreiten kann.

Die Brandschutzvorrichtung weist außerdem zwei endseitige einander gegenüber liegende Öffnungen für die Durchführung von Kabeln und/oder Rohren durch die Brandschutzvorrichtung auf. Es ist insbesondere möglich, dass die Brandschutzvorrichtung die Öffnungen im in der Ausnehmung eingesetzten Zustand bei Raumtemperatur aufweist, sodass auch nach Installation der Brandschutzvorrichtung noch Kabel oder Rohre durch die Ausnehmung hindurchgeführt werden können.

Die Brandschutzvorrichtung umfasst außerdem einen wärmeisolierenden Feststoff, der innerhalb des Gehäuses angeordnet ist. Der wärmeisolierende Feststoff unterscheidet sich vom intumeszierenden Material. Vorzugsweise ist der wärmeisolierende Feststoff nicht oder nur wenig intumeszierend und weist eine Wärmeleitfähigkeit von weniger als 0,1 W/(m*K) auf.

Es ist möglich, dass das Gehäuse den isolierenden Feststoff nicht komplett umgibt. Mit anderen Worten kann der isolierende Feststoff also aus dem Gehäuse herausragen. Es ist auch möglich, dass das Gehäuse eine Ausnehmung aufweist und dass der isolierende Feststoff diese Ausnehmung abdeckt.

Die beiden Funktionen Isolierung und Intumeszenz werden somit auf zwei verschiedene Materialien aufgeteilt, sodass als intumeszierendes Material beispielsweise ein graphitbasiertes Material verwendet werden kann. Der wärmeisolierende Feststoff kann beispielsweise silikatbasiert sein und die damit verbundenen Vorteile aufweisen. Auf eine Intumeszenz des wärmeisolierenden Feststoffs kann verzichtet werden, sodass sich der Herstellungsaufwand verringert. Außerdem werden Nachteile vermieden, die ein gleichzeitig wärmeisolierender und intumeszierender Feststoff aufweist.

Nach einer Ausführungsform der Erfindung kann der wärmeisolierende Feststoff zwischen dem Gehäuse und dem intumeszierenden Material angeordnet sein. So kann die wärmeisolierende Wirkung des Feststoffs besonders gut genutzt werden. Wenn das intumeszierende Material und der wärmeisolierende Feststoff aus dem Gehäuse heraus ragen, kann in dem Bereich, der aus dem Gehäuse heraus ragt, der wärmeisolierende Feststoff im in der Ausnehmung angeordneten Zustand zwischen dem intumeszierenden Material und der Gebäudewand bzw. der Gebäudedecke angeordnet sein.

Nach einer Ausführungsform der Erfindung kann der wärmeisolierende Feststoff am Gehäuse befestigt sein. Das intumeszierende Material kann am wärmeisolierenden Feststoff befestigt sein. Die Befestigung kann beispielsweise über eine Klebeverbindung erfolgen.

Nach einer Ausführungsform der Erfindung kann/können der wärmeisolierende Feststoff und/oder das intumeszierende Material schichtförmig ausgebildet sein. Beispielsweise können die Schichten eine Dicke von weniger als 5 mm aufweisen. Durch Verwendung der Schichten bleiben die Öffnungen der Brandschutzvorrichtungen auch nach Installation in der Ausnehmung in der Gebäudewand bzw. der Gebäudedecke und der Hindurchführung einiger Kabel und/oder Rohre durchgängig, sodass auch noch weitere Kabel und/oder Rohre durch die Ausnehmung hindurchgeführt werden können.

Nach einer Ausführungsform der Erfindung kann der wärmeisolierende Feststoff bei Erhitzung der Brandschutzvorrichtung eine abkühlende Wirkung haben. Es ist möglich, dass das intumeszierende Material diese Funktion nicht aufweist, da es sich beispielsweise um graphitbasiertes intumeszierendes Material handeln kann.

Nach einer Ausführungsform der Erfindung kann der wärmeisolierende Feststoff chemisch gebundenes Wasser umfassen. Das chemisch gebundene Wasser kann bei Erhitzung verdunsten und so die Brandschutzvorrichtung abkühlen. Dies ist besonders vorteilhaft, wenn der wärmeisolierende Feststoff silikatbasiert ist, da sich in bestimmte Silikate besonders einfach Wasser chemisch einbinden lässt.

Nach einer Ausführungsform der Erfindung kann der wärmeisolierende Feststoff ein Silikat, insbesondere Calcium- und/oder Natriumsilikat, umfassen.

Nach einer Ausführungsform der Erfindung kann die Brandschutzvorrichtung die endseitigen Öffnungen bei Raumtemperatur aufweisen, wenn das intumeszierende Material und der wärmeisolierende Feststoff innerhalb des Gehäuses angeordnet sind. Bei Erhitzung der Brandschutzvorrichtung werden die endseitigen Öffnungen dann durch das intumeszierende Material verschlossen. Dies ist vorteilhaft, da auch nachträglich noch Kabel und/oder Rohre durch die Brandschutzvorrichtung verlegt werden können.

Nach einer Ausführungsform der Erfindung kann die Brandschutzvorrichtung zwei miteinander verbindbare Teile umfassen. Jeder der Teile kann einen Teil des intumeszierenden Materials umfassen. Zusätzlich dazu kann auch noch jeder der Teile einen Teil des wärmeisolierenden Feststoffs und/oder einen Teil des Gehäuses umfassen. Die beiden Teile können insbesondere lösbar miteinander verbindbar sein. Unter einer lösbaren Verbindung wird dabei verstanden, dass die Verbindung gelöst werden kann, ohne dass die Brandschutzvorrichtung beschädigt oder zerstört wird. Es ist insbesondere möglich, dass die beiden Teile durch eine Steckverbindung miteinander verbindbar sind.

Die beiden verbindbaren Teile sind vorteilhaft, um die Brandschutzvorrichtung in Ausnehmungen relativ dicker Gebäudewände zu verwenden. Es kann dann jeweils von einer Seite der Gebäudewand ein Teil angebracht werden. Außerdem können beispielsweise Leerrohre innerhalb der Ausnehmung aus der Brandschutzvorrichtung heraus geführt werden und dann in einer Gebäudedecke weiter verlegt werden.

Nach einer Ausführungsform der Erfindung kann das Gehäuse eine oder mehrere Biegestellen aufweisen. Ein Biegebereich des Gehäuses lässt sich durch Biegung des Gehäuses an der bzw. den Biegestellen von einem Hauptbereich des Gehäuses weg biegen. Der Biegebereich kann beispielsweise laschenartig ausgebildet sein. Er kann beispielsweise in etwa in einem rechten Winkel vom Hauptbereich weg gebogen werden. Unter dem Hauptbereich wird dabei der Bereich des Gehäuses verstanden, der bei der bestimmungsgemäßen Verwendung der Brandschutzvorrichtung innerhalb der Ausnehmung angeordnet ist. Der Biegebereich kann der Bereich sein, der bei der bestimmungsgemäßen Verwendung außerhalb der Ausnehmung angeordnet ist. Der Biegebereich kann somit zur Befestigung der Brandschutzvorrichtung an der Gebäudewand bzw. der Gebäudedecke verwendet werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: eine schematische Ansicht einer Brandschutzvorrichtung nach einer Ausführungsform der Erfindung; und
- Fig. 2: eine schematische Schnittansicht der Brandschutzvorrichtung aus Fig. 1 entlang der Schnittlinie A-A.

Die Brandschutzvorrichtung umfasst ein Gehäuse 101, das aus zwei Teilen besteht, die mit Verbindungsmitteln 102 miteinander verbunden sind. Die Verbindungsmittel 102 ermöglichen eine Steckverbindung zwischen den beiden Teilen des Gehäuses 101.

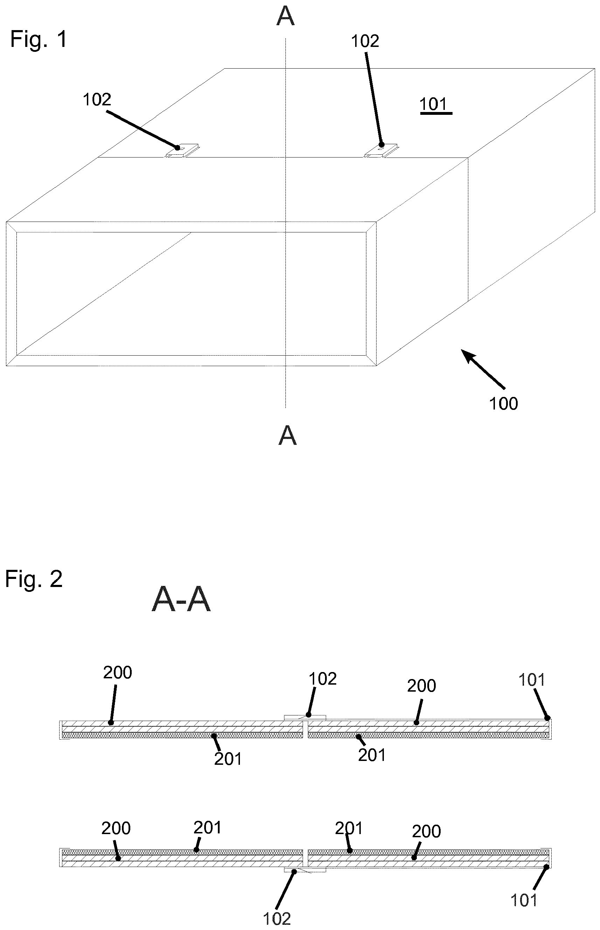

Am Gehäuse 101 ist der wärmeisolierende Feststoff 200 befestigt. In Figur 2 sind zwei Schichten des wärmeisolierenden Feststoffs 200 dargestellt, der nicht intumeszierend ist. Es ist jedoch auch möglich, dass mehr oder weniger Schichten vorhanden sind. An dem wärmeisolierenden Feststoff 200 ist eine Schicht des intumeszierenden Materials 201 befestigt, das im Brandfall aufschäumt und sein Volumen vervielfacht. Das intumeszierende Material 201 und der wärmeisolierende Feststoff 200 sind jeweils an der Ober- und an der Unterseite des Gehäuses 101 angeordnet.

Die Brandschutzvorrichtung 100 kann in eine Ausnehmung einer Gebäudewand oder eine Gebäudedecke eingesetzt werden. Durch die Brandschutzvorrichtung 100 können dann Kabel oder Rohre verlegt werden, da sie zwei endseitige einander gegenüberliegende Öffnungen aufweist. Durch die Verwendung zweier verschiedener Materialien für die Funktionen der Intumeszenz und der Wärmeisolierung ist der Herstellungsaufwand der Brandschutzvorrichtung 100 besonders gering und es werden die Vorteile der beiden Materialien genutzt. Außerdem sind die endseitigen Öffnungen bei Raumtemperatur nicht verschlossen. Dies ermöglicht die nachträgliche Verlegung von Kabeln und/oder Rohren durch die Brandschutzvorrichtung 100. Es ist auch nicht notwendig, dass die Kabel oder Rohre mit intumeszierenden und/oder isolierenden Materialien umwickelt werden.

In Figur 2 ist dargestellt, dass die Brandschutzvorrichtung 100 zwei miteinander über Verbindungselemente 102 verbindbare Teile umfasst. Die beiden Teile lassen sich ineinander stecken, was die Installation der Brandschutzvorrichtung insbesondere in dicken Gebäudewänden vereinfacht. In dem in Figur 2 linken Teil weist das Gehäuse 101 eine Ausnehmung auf. Im Brandfall verschließt das intumeszierende Material auch den Zwischenraum zwischen dem Gehäuse 101 und der Gebäudewand bzw. der Gebäudedecke, da er im Brandfall durch die Ausnehmung des Gehäuses 101 aufschäumen kann.

## Patentansprüche

1. Brandschutzvorrichtung (100) für den Einsatz in eine Ausnehmung einer Gebäudewand und/oder einer Gebäudedecke, umfassend ein Gehäuse (101) und ein intumeszierendes Material (201), das innerhalb des Gehäuses (101) angeordnet ist, wobei das Gehäuse (101) zwei endseitige Öffnungen für die Durchführung von Kabeln und/oder Rohren durch die Brandschutzvorrichtung (100) aufweist, **dadurch gekennzeichnet, dass** die Brandschutzvorrichtung (100) einen wärmeisolierenden Feststoff (200) umfasst, der innerhalb des Gehäuses (101) angeordnet ist.

2. Brandschutzvorrichtung (100) nach Anspruch 1, **dadurch gekennzeichnet, dass** der wärmeisolierende Feststoff (200) zwischen dem Gehäuse (101) und dem intumeszierenden Material (201) angeordnet ist.

3. Brandschutzvorrichtung (100) nach einem der vorherigen Ansprüche, **dadurch gekennzeichnet, dass** der wärmeisolierende Feststoff (200) am Gehäuse (101) befestigt ist und dass das intumeszierende Material (201) am wärmeisolierenden Feststoff (200) befestigt ist.

4. Brandschutzvorrichtung (100) nach zumindest einem der vorherigen Ansprüche, **dadurch gekennzeichnet, dass** der wärmeisolierende Feststoff (200) und/oder das intumeszierende Material (201) schichtförmig ausgebildet sind.

5. Brandschutzvorrichtung (100) nach zumindest einem der vorherigen Ansprüche, **dadurch gekennzeichnet, dass** der wärmeisolierende Feststoff (200) bei Erhitzung der Brandschutzvorrichtung (100) eine abkühlende Wirkung hat.

6. Brandschutzvorrichtung (100) nach zumindest einem der vorherigen Ansprüche, **dadurch gekennzeichnet, dass** der wärmeisolierende Feststoff (200) chemisch gebundenes Wasser umfasst.

7. Brandschutzvorrichtung (100) nach zumindest einem der vorherigen Ansprüche, **dadurch gekennzeichnet, dass** der wärmeisolierende Feststoff (200) ein Silikat, insbesondere Calcium- und/oder Natriumsilikat, umfasst.

8. Brandschutzvorrichtung (100) nach zumindest einem der vorherigen Ansprüche, **dadurch gekennzeichnet, dass** die Brandschutzvorrichtung (100) die endseitigen Öffnungen bei Raumtemperatur aufweist, wobei die endseitigen Öffnungen bei Erhitzung durch das intumeszierende Material (201) verschlossen werden.

9. Brandschutzvorrichtung (100) nach zumindest einem der vorherigen Ansprüche oder nach dem Oberbegriff des Anspruchs 1, **dadurch gekennzeichnet, dass** das die Brandschutzvorrichtung (100) zwei miteinander verbindbare Teile umfasst, wobei jeder der Teile einen Teil des intumeszierenden Materials (201) umfasst.

10. Brandschutzvorrichtung (100) nach zumindest einem der vorherigen Ansprüche oder nach dem Oberbegriff des Anspruchs 1, **dadurch gekennzeichnet, dass** das Gehäuse (101) eine oder mehrere Biegestellen aufweist, wobei ein Biegebereich des Gehäuses (101) durch Biegung des Gehäuses (101) an der bzw. den Biegestellen von einem Hauptbereich des Gehäuses (101) weg gebogen werden kann, wobei das Gehäuse (101) mittels des Biegebereichs an der Gebäudewand bzw. an der Gebäudedecke befestigbar ist.
